# EUROPÄISCHE PATENTSCHRIFT

(11) **EP 3 266 753 B1**
(45) Veröffentlichungstag und Bekanntmachung des Hinweises auf die Patenterteilung: **30.10.2024**
(21) Anmeldenummer: 17179834.1
(22) Anmeldetag: 05.07.2017
(51) Int. Cl.: C04B 7/24, C04B 7/32

(54) **VERFAHREN ZUR HERSTELLUNG EINES HYDRAULISCHEN BINDEMITTELS**
METHOD FOR PRODUCING A HYDRAULIC BINDING AGENT
PROCÉDÉ DE FABRICATION D'UN LIANT HYDRAULIQUE

(30) Priorität: 08.07.2016 AT 506122016
(43) Veröffentlichungstag der Anmeldung: 10.01.2018
(73) Patentinhaber: Baumit Beteiligungen GmbH, 2754 Waldegg (AT)
(72) Erfinder: Reil, Eberhard, 2384 Breitenfurt (AT); Tisch, Manfred, 2732 Würflach (AT); Waschnig, Albert, 2721 Bad Fischau-Brunn (AT); Buttinger-Kreuzhuber, Tamina, 1090 Wien (AT)
(74) Vertreter: Müllner, Martin

(56) Entgegenhaltungen:
- JP-A- H0 796 265
- JP-A- H0 796 266
- JP-A- H05 294 685
- JP-A- H06 263 496
- KR-A- 20110 117 353
- US-A1- 2007 266 902

## Beschreibung

### Technisches Gebiet

Die vorliegende Erfindung betrifft ein Verfahren zur Herstellung eines hydraulischen Bindemittels aus einem CaO-haltigen Stoff und einem Al₂O 3-haltigen Nebenprodukt aus der Sekundäraluminium-Herstellung.

### Stand der Technik

Unsere heutige Zeit benötigt schnelle Bindemittel. Diese finden vielfältigen Einsatz. Dazu gehört das Bindemittel Calciumaluminat/Tonerdeschmelzzement. Die gebrannten bzw. geschmolzenen Calciumaluminate werden als hochwertige, schnell abbindende Tonerdezemente mit hoher Festigkeit verwendet, in Kombination mit Portlandzement auch als Schnellzement. Die wasserfreien Calciumaluminate hydratisieren beim Abbinden von Zement (exothermer Prozess, ähnlich wie das Löschen von CaO) und bilden verschiedene Hydrate.

Um Aluminium zu recyceln, werden Aluminiumschrotte und "Krätzen" in Trommelöfen eingeschmolzen. "Krätze" ist ein Abfallprodukt bei der Verarbeitung von Aluminium und bei der Herstellung von Sekundäraluminium. Krätze ist ein Gemisch aus Aluminiummetall und feinkörnigen Oxidpartikeln und wird beim Schmelzen von Aluminium bei 800°C aus dem Aluminiumoxid der normalen Aluminiumkorrosion und als Oxidationsprodukt (Oxidhaut) beim Kontakt von flüssigem Aluminium mit Luftsauerstoff gebildet. Damit beim Aluminiumgießen keine Aluminiumoxidpartikel in den Gussteil gelangen, wird die Krätze durch Kratzvorrichtungen von der Oberfläche des Metallbads abgeschöpft.

Aufgrund des hohen Gehaltes an Aluminiummetall in der Krätze wird diese in Schmelzöfen in einem zweiten Schritt verwertet. Die schmelzflüssige Krätze wird mit Halogenidsalzen (rund zwei Drittel NaCl, ein Drittel KCl und geringen Mengen Calciumfluorid CaF₂) abgedeckt. Dabei entsteht als Nebenprodukt Salzschlacke.

Es gibt viele Publikationen und Patente zur Verwertung der Salzschlacke, z.B. R. Feige und G. Merker: "SEROX - ein synthetischer Al-Glasrohstoff", http://www.alumina.de/SEROX Al-Glasrohstoff DGG%20FA%20III.pdf. Das gängigste Verfahren ist die Wäsche der Salzschlacke. Der Nachteil dieses Verfahrens ist, dass zwar die Salze hinreichend gut entfernt werden, die in der Salzschlacke befindlichen Schwermetalle allerdings darin verbleiben.

Es ist auch bekannt, Al₂O₃-haltige Nebenprodukte aus der Sekundäraluminium-Herstellung (Salzschlacke, Aluminiumkrätze) zusammen mit CaO und CaSO₄ zu brennen, um ein hydraulisches Bindemittel herzustellen. Dadurch wird das Al₂O₃-haltige Nebenprodukt einer sinnvollen Verwertung zugeführt und muss nicht entsorgt werden. Es gibt zahlreiche einschlägige Veröffentlichungen, hier sei nur auf die EP 0838443 A oder auf JP H05 294685 A verwiesen. Bei all diesen Schriften wird ein aufbereitetes Al₂O₃-haltiges Nebenprodukt eingesetzt. Das Problem ist, dass das Al₂O₃-haltige Nebenprodukt stark verunreinigt ist, insbesondere Salze enthält, die durch die Aufbereitung abgetrennt werden müssen, will man die Qualität des hergestellten Bindemittels nicht durch die Salze verschlechtern. Durch diese Aufbereitung wird das Verfahren aber insgesamt teuer. Dennoch verbleiben die Schwermetalle, die durch die Aufbereitung nicht abgetrennt werden, im Bindemittel, oft in unzulässig hohen Mengen. In KR 2011-0117353 A wird Aluminiumkrätze als Alternative zu Bauxit erwähnt, ein genaues Verfahren für Aluminiumkrätze ist nicht beschrieben. Gemäß US 2007/266902 A1 wird kein hydraulisches Bindemittel hergestellt, sondern ein Produkt zur Verwendung bei der Stahlveredelung, sodass Verunreinigungen weniger stören. Gemäß JP H07 96265 A werden die Salze aus Aluminiumkrätze dadurch entfernt, dass die Aluminiumkrätze zusammen mit SiO₂ (in einer Menge, die größer ist als das in der Krätze enthaltene Aluminiumnitrid) auf zumindest 800°C erhitzt wird.

### Kurzbeschreibung der Erfindung

Es ist Aufgabe der vorliegenden Erfindung, diesen zusätzlichen Aufwand, der durch die Aufbereitung der Krätze entsteht, zu beseitigen.

Diese Aufgabe wird durch ein Verfahren der eingangs genannten Art erfindungsgemäß dadurch gelöst, dass man das Al₂O₃-haltige Nebenprodukt ohne vorheriges Waschen, bei dem die Salze entfernt würden, zusammen mit dem CaO-haltigen Stoff bei 1.500°C bis 2.000°C, vorzugsweise bei zumindest 1.700°C, brennt und schmilzt, wodurch die Salze und Schwermetalle ausgetrieben werden, und die in den Abgasen enthaltenen flüchtigen Salze durch Abkühlung rückgewinnt.

Im Rahmen der vorliegenden Erfindung wurde gefunden, dass sich die Verunreinigungen des Al₂O₃-haltigen Nebenprodukts verflüchtigen, wenn man mit 1.500°C bis zu 2.000°C, vorzugsweise zumindest 1.700°C, brennt bzw. schmilzt, sodass das entstehende Bindemittel Verunreinigungen nur noch im zulässigen Rahmen enthält. Und zwar verflüchtigen sich nicht nur die Salze, die bei diesen Temperaturen verdampfen, sondern auch die Schwermetalle. Diese bilden mit den vorhandenen Salzen Halogenide (insbesondere Chloride), die bei diesen Temperaturen bereits gasförmig sind und somit ebenfalls mit dem Abgasstrom ausgetragen werden. Wenn man den Abgasstrom abkühlt, kondensieren die Salze und die Schwermetallhalogenide, sodass sie auf diese Weise leicht aus dem Abgasstrom entfernt und rückgewonnen werden können.

Es kann also Salzschlacke für die Herstellung eines Bindemittels ohne Vorbehandlung (ohne Waschen) verwendet werden. Dies erspart nicht nur den Aufwand für die Aufbereitung, sondern führt sogar dazu, dass die Schwermetallbelastung des Bindemittels stark verringert wird. Die Salze können auch hier (so wie bei der Aufbereitung) wiedergewonnen und bei der Aluminiumherstellung neuerlich verwendet werden.

Das Bindemittel kann aus primärrohstoffschonenden Stoffgemischen hergestellt werden: das Al₂O₃ ist ein vorhandenes Nebenprodukt aus der Sekundäraluminium-Herstellung und Kalkstein ist reichlich vorhanden, es kann z.B. Kalkstein aus Kalksteinbrüchen verwendet werden, es können aber ebenso Nebenprodukte, die CaO bzw. CaCOs enthalten, verwendet werden.

Das Material wird vorzugsweise auf 1.700°C erhitzt und geschmolzen. Dazu benötigt man ein Schmelzaggregat mit den entsprechenden Rauchgasreinigungsanlagen. Das geschmolzene Material wird nach einer bestimmten Verweilzeit in regelmäßigen Abständen (bzw. kontinuierlich) abgezogen und in Kokillen gegossen.

Zur Herstellung der angestrebten Phasenzusammensetzung des Bindemittels ist das Mischungsverhältnis der chemischen Zusammensetzung der Rohstoffe entsprechend einzustellen (siehe Beispiel). Die beim Schmelzprozess anfallenden Salze können wieder der Aluminiumindustrie zugeführt werden.

Es ist zweckmäßig, wenn das Brennen und Schmelzen unter reduzierender Atmosphäre erfolgt. Dadurch wird die Bildung von Schwermetallhalogeniden begünstigt.

Weiters ist es günstig, wenn man das gebrannte bzw. geschmolzene Produkt mit dem "rotating cup-Verfahren" oder im Wasserbad rasch abkühlt, denn dadurch werden die Eigenschaften des gebrannten oder geschmolzenen Produktes beeinflusst. Durch Zugabe von Schwefelsäure im Wasserbad kann die Funktionalität des Bindemittels gesteigert werden. Auf diese Weise erhält man ein "amorphes" Bindemittel, das besonders schnell abbindet.

Schließlich ist es zweckmäßig, wenn man nach der Wertstoffrückgewinnung durch Abkühlung die Abgase zusätzlich mittels filternder Medien (z.B. Aktivkohle) reinigt. Die Schwermetalle werden zwar zum Teil zusammen mit den Salzen beim Abkühlen abgeschieden; um aber die Umwelt nicht zu belasten, sollten die im Abgas verbleibenden Schwermetalle durch Aktivkohlefilter abgeschieden werden, bevor die Abgase in die Umwelt eingebracht werden.

Ein Teil der Schwermetalle wird mit den Salzen beim Abkühlen abgeschieden. Je nach Anforderungen des zurückgewonnenen Salzes, kann ein nachgeschalteter Waschvorgang zur Reduktion des Schwermetallgehaltes durchgeführt werden.

### Beschreibung der Ausführungsarten

An Hand eines Beispiels wird die vorliegende Erfindung näher erläutert.

Ausgegangen wird von folgenden beiden Rohstoffen (alle Angaben sind Masse-%):

**Tabelle 1**

| Ausgangsrohstoffe | Salzschlacke | CaCO₃ |
|---|---|---|
| Glühverlust 1000°C | - | 42,5 |
| Al₂O₃ | 27,1 | |
| SiO₂ | 3,0 | 1,0 |
| Fe₂O₃ | 0,85 | 0,2 |
| CaO | 1,6 | 54,5 |
| MgO | 3,5 | 0,9 |
| K₂O | 10,5 | |
| Na₂O | 23,3 | |
| Cl | 28,6 | |

Um eine Rohmischung herzustellen, wird die Salzschlacke mit Kalksteinmehl (CaCO₃) abgemischt, um laut Berechnungen die hochreaktive Phase Mayenit (C12A7) zu erhalten. Das Rohmehl besteht somit aus 62,7% Salzschlacke und 37,3% Kalksteinmehl.

Die Mischung wird im Probenbehälter homogenisiert, bei 950°C in einen Siliciumcarbid-Schmelztiegel aufgegeben und bei einem stetigen Anstieg der Temperatur auf über 1.700°C erhitzt. Die Temperaturbereiche lassen sich folgendermaßen gliedern:
1 Stunde bei 950 bis 1.250°C
1 Stunde bei 1.250 bis 1.450°C
1 Stunde bei 1.450 bis > 1.700°C

Die lange Verweilzeit dient zur Entsäuerung des Kalksteins sowie zur thermischen Entfernung der Salzanteile sowie der Reduzierung der Schwermetallgehalte in der Schmelze. Nach der Verweilzeit von drei Stunden sind die Reaktionen abgelaufen, die im Kalziumaluminat-Klinker zu den Hauptphasen Mayenit, C12A7, Monokalziumaluminat, CA, und Gehlenit, CAS, führen. Nebenphasen sind Spinell, MgAl₂O₄, und Quarz, SiO₂.

Ab etwa 1.400°C beginnt das Rohmehl flüssig zu werden. Die Turbulenz in der Schmelze führt zu einem verstärkten Ausdampfen der Salze.

Die flüssige Schmelze kann durch verschiedene Methoden abgekühlt werden.

Um einen kristallinen Klinker zu erhalten, wird die Schmelze in eine Kokille gegossen und durch mechanische Zerkleinerung und die daraus folgende Vergrößerung der Oberfläche durch die Umgebungsluft abgekühlt.

Um eine amorphe Struktur des Klinkers zu erhalten, wird die Schmelze durch Trockengranulation auf einem Granulationsteller abgekühlt. Die hohe Abkühlgeschwindigkeit führt zu einem glasigen Erstarren des Klinkers. Eine amorphe Struktur führt zu einem höheren Aktivitätspotential des Klinkers und dadurch zu schnelleren Abbindezeiten und höheren Frühfestigkeiten.

Die röntgenographische Analyse des erhaltenen Klinkers zeigt einen Al₂O 3 Gehalt von 39 Masse-%. Der Chlor-Gehalt wurde durch den Schmelzprozess auf 0,05 Masse-% reduziert. Zudem wurden durch das Austreiben der Schwermetallchloride die Schwermetallgehalte um ein Vielfaches reduziert. Zum Beispiel wurden 3.500 ppm Cu in der Salzschlacke auf 105 ppm Cu im beschriebenen Calziumaluminat-Klinker reduziert.

Bei der Verwendung anderer kalkhaltiger Rohstoffe wie Branntkalk oder Flugasche, die eine andere chemische Zusammensetzung aufweisen, müssen die angegebenen Gewichtsverhältnisse entsprechend angepasst werden.

Bei verschiedenen Brennversuchen konnten immer folgende Grenzwerte eingehalten werden (alle Angaben in ppm):

**Tabelle 2**

| | |
|---|---|
| V | < 100 |
| Cr | < 200 |
| Co | < 200 |
| Ni | < 80 |
| Cu | < 500 |
| Zn | < 10 |

Großtechnisch wird die Salzschlacke zerkleinert (Schlackenbrecher, Hammermühle) und klassiert. Aluminium wird ausgeschleust. Die verbleibende Salzschlacke wird ohne weitere Aufbereitung, insbesondere ohne Waschen, mit dem CaO-Träger vermischt und in einem Ofen gebrannt bzw. geschmolzen. Großtechnisch können Kupolöfen, Schachtöfen, Induktionsöfen, Drehtrommelöfen oder Lichtbogenöfen eingesetzt werden. Als Energieträger können fossile Brennstoffe (Erdgas), auch in Kombination mit Sekundärbrennstoffen oder Strom (induktiv, Lichtbogen, etc.) verwendet werden. Ab ca. 850°C schmelzen die Salze, ab 1.450°C sind die Salze verflüchtigt. Die in der Salzschlacke befindlichen Schwermetalle werden bei Bedarf unter reduzierender Atmosphäre z.T. verflüchtigt bzw. es bilden sich Schwermetallchloride, die ausgetrieben werden. Die Schmelze wird auf 1.700°C erhitzt.

Nach einer bestimmten Haltezeit sind sowohl die Salzfrachten als auch die Schwermetalle großteils verdampft, das verbleibende schmelzflüssige Material ist somit "entfrachtet". Die Schmelze wird danach ausgegossen und unter bestimmten Bedingungen abgekühlt. Erfolgt die Abkühlung langsam, bildet sich ein Calciumaluminat mit Tonerdeschmelzzement-Eigenschaften. Wird das Material sehr rasch abgekühlt, z.B. mit dem "rotating cup-Verfahren" (Trockengranulation) bzw. im Wasserbad, entsteht eine "amorphe" Struktur, die Abbindezeiten verkürzen sich wesentlich. Die Kühlluft wird bei der Trockengranulation aufgewärmt und kann rekuperativ energetisch genutzt werden.

Die von der Schmelzanlage kommenden Abgase/Salzfrachten werden abgekühlt und in einer ersten Filteranlage werden die Salze/ Schwermetallchloride abgeschieden. Die in den Abgasen verbleibenden Schwermetallverbindungen werden in einer zweiten Filteranlage mit Aktivkohle gebunden und abgeschieden. Durch eine entsprechende Temperaturführung der Abgase kann die chemische Zusammensetzung der Filterstäube gesteuert werden.

Die Salze werden wieder der Aluminiumindustrie zugeführt, es entsteht also ein vollständiger Kreislauf.

Die Schwermetalle verbleiben entweder im Salz (als Schwermetallchloride) und/oder werden in der zweiten Filteranlage mit Aktivkohle ausgeschleust.

Mit dem erfindungsgemäßen Verfahren können normgemäße Tonerdeschmelzzemente hergestellt werden (Angaben in Masse-%):

**Tabelle 3**

| | **ÖN EN 14647** |
|---|---|
| Tonerdegehalt (als Al₂O₃) | 35%-58% |
| Sulfidgehalt (als S²⁻) | ≤ 0,10% |
| Chloridgehalt | ≤ 0,10% |
| Alkaligehalt (Na₂O + 0,658 K₂O) | ≤ 0,4% |
| Sulfatgehalt (als SO₃) | ≤ 0,5% |

Mögliche Zusammensetzungen sind (Angaben in Masse-%)

**Tabelle 4**

| | |
|---|---|
| Al₂O₃ | 32-80 |
| CaO | 15-55 |
| SiO₂ | 0-7 |
| Fe₂O₃ | 0-1 |
| MgO | 0-6 |
| SO₃ | 0,0-0,2 |
| Cl | 0,0-0,2 |
| TiO₂ | 0,0-0,28 |

## Patentansprüche

1. Verfahren zur Herstellung eines hydraulischen Bindemittels aus einem CaO-haltigen Stoff und einem Al₂O₃-hältigen Nebenprodukt aus der Sekundäraluminium-Herstellung, **dadurch gekennzeichnet, dass** man das Al₂O₃-hältige Nebenprodukt ohne vorheriges Waschen, bei dem die Salze entfernt würden, zusammen mit dem CaO-haltigen Stoff bei 1500°C bis 2000°C, vorzugsweise bei zumindest 1700°C, brennt und schmilzt, wodurch die Salze und Schwermetalle ausgetrieben werden, und die in den Abgasen enthaltenen flüchtigen Salze durch Abkühlung rückgewinnt.

2. Verfahren nach Anspruch 1, **dadurch gekennzeichnet, dass** das Brennen und Schmelzen unter reduzierender Atmosphäre erfolgt.

3. Verfahren nach Anspruch 1 oder 2, **dadurch gekennzeichnet, dass** man die Eigenschaften des gebrannten oder geschmolzenen Produktes durch rasche Abkühlung mit dem rotating cup-Verfahren oder im Wasserbad beeinflusst.

4. Verfahren nach einem der Ansprüche 1 bis 3, **dadurch gekennzeichnet, dass** man nach der Wertstoffrückgewinnung durch Abkühlung die Abgase zusätzlich durch filternde Medien reinigt, beispielsweise durch Adsorption mittels Aktivkohle.

## Claims

1. A method for the production of a hydraulic binder from a CaO containing substance and an Al₂O₃ containing by-product from secondary aluminium production, **characterised in that** the Al₂O₃ containing by-product is burned and melted together with the CaO containing substance at 1500°C to 2000°C, preferably at least 1700°C, without prior washing, in which the salts would have been removed, whereby the salts and heavy metals are expelled, and the volatile salts contained in the exhaust gases are recovered by cooling.

2. The method according to claim 1, **characterised in that** the burning and melting takes place under reduced atmosphere.

3. The method according to claim 1 or 2, **characterised in that** the properties of the burned or melted product are influenced by rapid cooling using the rotating cup method or in a water bath.

4. The method according to any of claims 1 to 3, **characterised in that,** after the resource recovery by cooling, the exhaust gases are additionally purified by filtering media, for example by adsorption using activated carbon.

## Revendications

1. Procédé de fabrication d'un liant hydraulique à partir d'une matière contenant du CaO et d'un sous-produit contenant du Al₂O₃ lequel provient de la production d'aluminium secondaire, **caractérisé en ce que** l'on soumet le sous-produit contenant du Al₂O₃, sans l'avoir lavé auparavant ce qui enlèverait les sels, ensemble avec la matière contenant du CaO, à une calcination et une fusion réalisées entre 1 500 °C et 2 000 °C, préférentiellement à au moins 1 700 °C, ce qui permet d'en chasser les sels et les métaux lourds, puis de récupérer par refroidissement les sels volatils contenus dans les émissions gazeux.

2. Procédé selon la revendication 1, **caractérisé en ce que** la calcination et la fusion sont réalisées sous atmosphère réductrice.

3. Procédé selon les revendications 1 ou 2, **caractérisé en ce que** l'on influe sur les propriétés du produit calciné ou fondu en effectuant un refroidissement rapide par un processus à gobelet rotatif ou dans un bain d'eau.

4. Procédé selon l'une des revendications 1 à 3, **caractérisé en ce que,** suite à la récupération des matières valorisables par refroidissement, lesdits effluents gazeux sont en outre purifiés par des milieux filtrants, s'agissant par exemple d'une adsorption au moyen de charbon actif.
